# EUROPEAN PATENT SPECIFICATION

(11) **EP 4 232 594 B1**
(45) Date of publication and mention of the grant of the patent: **03.06.2026**
(21) Application number: 21883692.2
(22) Date of filing: 19.10.2021
(51) Int. Cl.: G01N 1/40

(54) **SAMPLE COLLECTION APPARATUS AND METHODS FOR IMMUNOASSAY TESTING**
PROBENSAMMELVORRICHTUNG UND VERFAHREN FÜR IMMUNOASSAYTESTS
APPAREIL DE COLLECTE D'ÉCHANTILLONS ET MÉTHODES DE TEST D'IMMUNOESSAI

(30) Priority: 23.10.2020 US 202063104640 P
(43) Date of publication of application: 30.08.2023
(73) Proprietor: Siemens Healthcare Diagnostics, Inc., Tarrytown, NY 10591 (US)
(72) Inventor: LEDDEN, David, Elkhart, Indiana 46514 (US); MAYFIELD, Jeffrey, South Bend, Indiana 46637 (US); HUFF, Hollie, Sedalia, Colorado 80135 (US)
(74) Representative: Schweitzer, Klaus
(86) International application number: PCT/US2021/055602
(87) International publication number: WO 2022/086955

(56) References cited:
- WO-A1-2005/103259
- WO-A1-2012/007502
- R. H. MULLER, H. M. ROSE: "Concentration of Influenza Virus (PR8 Strain) by a Cation Exchange Resin", PROCEEDINGS OF THE SOCIETY FOR EXPERIMENTAL BIOLOGY AND MEDICINE, vol. 80, no. 1, 30 April 1952 (1952-04-30), GB , pages 27 - 29, XP009537162, ISSN: 0037-9727, DOI: 10.3181/00379727-80-19510
- SENTMANAT MONICA; KOURANOVA EVGUENIA; CUI XIAOXIA: "One-step RNA extraction for RT-qPCR detection of 2019-nCoV", BIORXIV PREPRINT, 21 October 2020 (2020-10-21), pages 1 - 12, XP055774357, Retrieved from the Internet <URL:https://www.biorxiv.org/contenUbiorxiv/early/2020/10/21/2020.04.02.022384.full.pdf> [retrieved on 20220215]
- TREDER KRZYSZTOF, ZACHARZEWSKA BOGUMIŁA, PRZEWODOWSKA AGNIESZKA, PRZEWODOWSKI WŁODZIMIERZ, OTULAK KATARZYNA: "ION-EXCHANGE MEMBRANE CHROMATOGRAPHY AS AN ALTERNATIVE METHOD OF SEPARATION OF POTATO Y VIRUS", PLANT BREEDING AND SEED SCIENCE, vol. 72, December 2015 (2015-12-01), pages 55 - 67, XP055936721
- JUNTER ET AL.: "Cellulose-based virus-retentive filters: a review", REVIEWS IN ENVIRONMENTAL SCIENCE AND BIOTECHNOLOGY, vol. 16, no. 3, 1 June 2017 (2017-06-01), pages 455 - 489, XP037067912, DOI: 10.1007/s11157-017-9434-1

## Description

### FIELD

The present application relates to apparatus and methods that provide sample collection and processing for immunoassay testing.

### BACKGROUND

Coronaviruses (CoVs) are a family of ribonucleic acid (RNA) viruses that include the severe acute respiratory syndrome coronavirus 2 (SARS-CoV-2). SARS-CoV-2 causes coronavirus disease 2019 (COVID-19).

The gold standard test for a COVID-19 active infection is real-time, reverse transcription, polymerase chain reaction (real-time RT-PCR). However, real-time RT-PCR is expensive and time consuming, and typically requires highly trained clinical healthcare providers. Several companies have developed rapid lateral flow antigen tests for diagnosis of a COVID-19 active infection. Although these tests cost much less, are faster (e.g., 15-30 minutes), and may not require highly trained healthcare professionals to administer, they are generally less sensitive than real-time RT-PCR.

Common acceptable methods for obtaining samples for molecular antigen quantification tests are nasal swabs, nasopharyngeal swabs, and throat swabs. More recently saliva samples have been used. In addition, some institutions (e.g., the British Columbia Centre for Disease Control (BCCDC) and Charite Hospital in Berlin, Germany) are investigating gargle test samples, which appear to be feasible for molecular tests.

Accordingly, there is a need for messenger RNA (mRNA) testing that not only provides rapid antigen quantification, but that also provides increased sensitivity.

A prior art method is disclosed in the article of R. H. Muller, H. M. Rose, Proceedings of the Society for Experimental Biology and Medicine, vol. 80, no. 1, April 1952, in which influenza viruses are concentrated by a using a cation exchange resin.

### SUMMARY

In some embodiments, a method of increasing a concentration of an antigen of a respiratory virus is provided. The method includes preparing a sample containing a first concentration of the antigen. The method further includes contacting the sample containing the first concentration of the antigen to a first material having a negatively-charged surface, thereby capturing an amount of the antigen with the first material. The method also includes contacting a second material to the first material to transfer the antigen from the first material to the second material, the second material having an ionic strength sufficient to release the captured antigen from the first material into the second material. The method also includes obtaining a resulting solution containing the antigen in a second concentration. The second concentration of antigen in the resulting solution is higher than the first concentration of antigen in the sample. The sample is saliva or a gargle solution containing saliva.

Other features, aspects, and advantages of embodiments in accordance with the present disclosure will become more fully apparent from the following detailed description, the subjoined claims, and the accompanying drawings by illustrating a number of example embodiments and implementations.

### BRIEF DESCRIPTION OF THE DRAWINGS

FIGS. 1A-1H illustrate a first embodiment of a collection apparatus including a syringe at various phases of a collection and concentration method in accordance with the disclosure.
FIGS. 2A-2H illustrate a second embodiment of a collection apparatus at various phases of a collection and concentration method including an insert and a plunger in accordance with the disclosure.
FIGS. 3A-3F illustrate a third embodiment of a collection apparatus at various phases of a collection and concentration method including one or more dried reagents in accordance with the disclosure.
FIGS. 4A-4E illustrate a fourth embodiment of a collection apparatus at various phases of a collection and concentration method including a waste receptacle and a collapsible bellows in accordance with the disclosure.
FIG. 5 illustrates an embodiment of a collection method for increasing the concentration of a COVID-19 antigen in accordance with the disclosure.
FIG. 6 illustrates an example method of making a collection apparatus configured to collect and concentrate a COVID-19 antigen in accordance with the disclosure.
FIG. 7 illustrates an embodiment of a collection method of increasing a concentration of an antigen of a respiratory virus in accordance with the disclosure.

### DETAILED DESCRIPTION

As mentioned, although rapid antigen tests cost much less, are faster than real-time RT-PCR, and may not require highly trained healthcare professionals to administer, they are generally less sensitive than real-time RT-PCR. Embodiments described herein provide methods and apparatus for increasing the sensitivity of rapid antigen tests through amplification of the antigen being tested. For example, the sensitivity of a rapid antigen test may be increased by concentrating an antigen, such as a COVID-19 antigen, during a saliva and/or gargle collection process in accordance with one or more embodiments described below.

The nucleocapsid protein (N-protein) expressed on the COVID-19 virus has a very high isoelectric point (pI) of about 10.5. As such, when released, the N-protein will be positively charged whereas most other proteins will be negatively charged. In one or more embodiments described herein, a saliva sample or a gargle solution sample containing saliva is processed to release the N-protein. In some embodiments, a sample containing saliva and gargle solution is subjected to one or more reagents, which may serve a dual function of changing (e.g., increasing) the pH of the sample and lysing the cells within the sample to release COVID-19 antigen (e.g., the N-protein). Example pH-increasing reagents may include sodium hydroxide, potassium hydroxide, or the like. Example lysing reagents may include non-ionic detergents such as polyoxyethylene sorbitan monolaurate (polysorbate 20), also known as Tween^{™} 20, another polyoxyethylene surfactant such as Brij^{™}-35, an octylphenol ethoxylate surfactant such as Triton^{™} X-100, etc. Other pH-increasing and/or lysing reagents may be used.

A binding medium, such as a cation ion exchange agent (e.g., a membrane or resin), having a negatively-charged surface, may be provided to contact the pH-adjusted and lysed sample. During contact with the binding medium, at least some, and in some embodiments a majority, of N-protein present in the lysed and pH-adjusted sample is attracted and bound to the negatively-charged surface of the binding medium. The binding medium may include carboxymethyl cellulose, carboxymethyl agarose, sulphopropyl sepharose, sulphopropyl agarose, or any other suitable cation ion exchange agent, for example.

Following capture of N-protein by the negatively-charged surface of the binding medium, the surface having the N-protein captured thereon may be exposed to a relatively low-volume buffer solution of relatively high ionic strength (e.g., >0.1 M in some embodiments). This will release N-protein from the negatively-charged surface of the binding medium into the low-volume buffer solution, thereby concentrating the COVID-19 antigen and producing a concentrated COVID-19 antigen solution. The concentrated COVID-19 antigen solution may then be used with a COVID-19 rapid antigen test, and produce more accurate results due to the higher antigen concentration.

In some embodiments, the low-volume buffer solution may be a phosphate-containing buffer solution with a relatively high salt (e.g., sodium chloride (NaCl)) concentration. Other high ionic strength solutions that may be used include, for example, sodium chloride, sodium fluoride, sodium bromide, potassium chloride, potassium fluoride, potassium bromide, lithium chloride, lithium fluoride, lithium bromide, or the like.

In one or more embodiments, the low-volume buffer solution may have a volume that is approximately 2 to 50, and in some embodiments approximately 10 to 50, times lower than the original saliva and/or gargle sample (e.g., an approximately 1:10-1:50 ratio of buffer solution volume to original sample volume). Other volume ratios between the low-volume buffer solution and the original sample may be used. This decrease in volume creates an amplification in N-Protein available for testing. Thus, methods and apparatus are provided to concentrate a COVID-19 antigen without the use of time-consuming real-time RT-PCR.

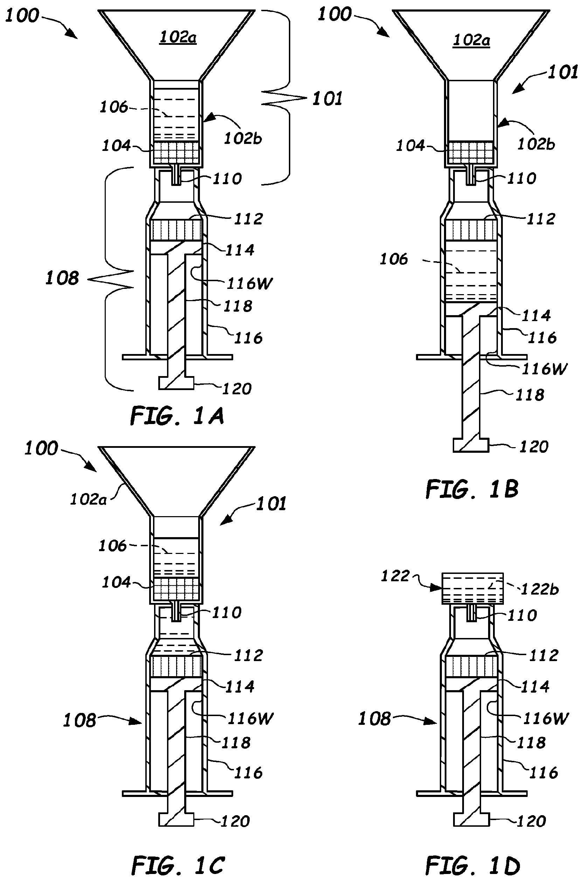

In accordance with the disclosure, several example embodiments of apparatus and methods configured to enable collection and concentration of a COVID-19 antigen are shown and described with reference to FIGs. 1A-6.

FIGS. 1A-1H illustrate a first embodiment of a collection apparatus at various phases of a collection and concentration method in accordance with the disclosure. With reference to FIG. 1A, a collection apparatus 100 is shown that includes a gargle collection device 101. Gargle collection device 101 may have any shape suitable for facilitating collection of a gargle sample. For example, in the embodiment of FIG. 1A, gargle collection device 101 has a funnel region 102a that extends into a collection region 102b to facilitate transfer of a gargle sample from a patient to collection region 102b. Other shapes and/or configurations may be used.

Collection region 102b includes a reagent member 104 that comprises an exchange medium, such as a porous paper disc, a porous membrane, a porous resin, or the like, having one or more reagents deposited therein or thereon. For example, a porous resin may be molded or otherwise formed with openings or channels that allow sample solution to flow therethrough. A porous membrane may be formed from nylon, nitrocellulose, polytetrafluoroethylene, or another suitable material. In some embodiments, reagent member 104 is configured to perform at least two different functions. In a first function, reagent member 104 may be configured as a pH adjuster including one or more reagents functioning to increase the pH of a sample 106 (e.g., saliva or gargle solution with saliva) collected in gargle collection device 101. In some embodiments, the pH of sample 106 may be increased to between about 9.0 and 9.5. Other pH ranges may be used. Example reagents that may be employed include sodium hydroxide, potassium hydroxide, or any other suitable base.

In a second function, reagent member 104 may include a lysing agent, such as a detergent, provided in or on an exchange medium. The lysing agent is configured to lyse any intact SARS-CoV-2 virus particles and release the N-protein therein, which is the analyte to be later measured during a COVID-19 rapid antigen test. Example lysing reagents may include non-ionic detergents such as polyoxyethylene sorbitan monolaurate (polysorbate 20), also known as Tween^{™} 20, another polyoxyethylene surfactant such as Brij^{™}-35, an octylphenol ethoxylate surfactant such as Triton^{™} X-100, etc. Other lysing reagents may be used.

Example dimensions for reagent member 104 may range from about 1-2 cm in width, depending on the diameter of collection region 102b, and about 1-2 mm in thickness. Other dimensions may be used.

As mentioned, gargle collection device 101 may include any type of receptacle configured to capture a relatively large volume of sample 106. In some embodiments, sample 106 may be a gargle solution provided in a known volume (e.g., about 1-5 mL) that has been swished about a patient's mouth and/or gargled in the patient's throat so that saliva and/or other mucous containing SARS-CoV-2 virus particles is mixed with the gargle solution. Gargle solution may comprise distilled water, a solution containing a salt, such as NaCl, etc. Other suitable gargle solutions may be used. For example, a 0.9% saline solution or another suitable concentration of saline solution may be employed.

When a saliva and/or saliva and gargle sample 106 contacts or passes through reagent member 104, reagents within reagent member 104 change (e.g., increase) the pH of sample 106 and lyse any SARS-CoV-2 cells present within sample 106 to release the N-protein.

Collection apparatus 100 may include a syringe 108 configured to connect to and extract a portion of sample 106 from gargle collection device 101. As shown in FIG. 1A, in some embodiments, syringe 108 may interface with gargle collection device 101 via a drain 110 or other opening in collection region 102b. Other interfaces may be used.

Syringe 108 may include a binding medium 112 exhibiting a negatively-charged surface that attracts N-protein present within sample 106 after sample 106 is pH-adjusted and lysed by reagent member 104. In some embodiments, binding medium 112 (exhibiting a negatively-charged surface) may include a paper disc, a membrane, or a resin that is sufficiently porous or contains channels so as to allow pH-adjusted and lysed sample 106 to pass through binding medium 112. Because the N-protein of the COVID-19 virus is positively charged, N-protein within lysed sample 106 will be attracted to and held by the negatively-charged surface of binding medium 112. In some embodiments, binding medium 112 may include carboxymethyl cellulose, carboxymethyl agarose, sulphopropyl sepharose, sulphopropyl agarose, or any other suitable cation ion exchange resin or material, for example. Example dimensions for binding medium 112 may range from about 4-6 mm in width, depending on the diameter of syringe 108, and about 1-2 mm in thickness. Other dimensions may be used.

During sample collection, a patient may gargle and/or swish a saline or other solution and deposit (e.g., spit) the gargled and/or swished solution into gargle collection device 101 as sample 106. Syringe 108 coupled to gargle collection device 101 may then be used to pull (draw) sample 106 through reagent member 104 (e.g., a porous paper, membrane, or resin) thereby increasing the pH of sample 106 and lysing any intact SARS-CoV-2 virus particles to produce a pH-adjusted and lysed sample 106. For example, syringe 108 may include a piston 114 sealingly moveable relative to a wall 116W of a syringe body 116. Syringe 108 may also include a shaft 118 and end 120 that, when moved in a direction away from gargle collection device 101, causes piston 114 to draw sample 106 through reagent member 104 (which pH-adjusts and lyses sample 106). Sample 106 is also pulled across and/or through the negatively-charged surface of binding medium 112 where N-protein from pH-adjusted and lysed sample 106 will be captured and bound thereto (FIG. 1B).

As shown in FIG. 1C, sample solution that has passed through binding medium 112 may be moved back into gargle collection device 101 using syringe 108. Gargle collection device 101 may then be removed from syringe 108 and disposed of (e.g., in a biohazard waste container). In this state, syringe 108 includes N-protein bond within binding medium 112.

With reference to FIG. 1D, after collection of N-protein within binding medium 112 of syringe 108, syringe 108 may be attached to an elution buffer container 122 (e.g., a tube or other small container) containing a reagent (e.g., elution buffer solution 122b) configured to elute the N-protein bound within binding medium 112. Example elution buffer solutions may include a phosphate buffer, sodium chloride, sodium fluoride, sodium bromide, potassium chloride, potassium fluoride, potassium bromide, lithium chloride, lithium fluoride, lithium bromide, another high ionic strength solution, or the like. Other elution buffer solutions may be used.

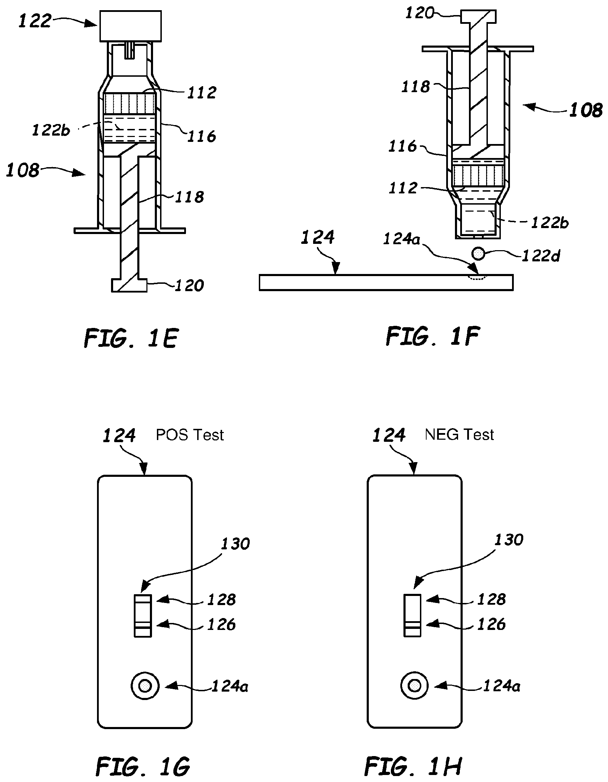

Syringe 108 may be used to draw elution buffer solution 122b from elution buffer container 122 through binding medium 112 to release N-protein bound therein into elution buffer solution 122b as shown in FIG. 1E. Thereafter, the empty elution buffer container 122 may be removed (e.g., and disposed of in a biohazard waste container).

By using binding medium 112 to trap N-protein from sample 106 and elution buffer solution 122b to free the trapped N-protein, a higher concentration of N-protein may be obtained for testing. For example, the original sample 106 may have a volume that is larger than the volume of elution buffer solution 122b used to free N-protein from binding medium 112. In some embodiments, the volume of original sample 106 may be substantially larger than the volume of elution buffer solution 122b employed (e.g., 2, 5, 10, 50 or more times the elution buffer solution volume) so that the concentration of N-protein in elution buffer solution 122b within syringe 108 is significantly higher than in the original sample (sample 106). Example original sample volumes may range from about 1-5 mL while elution buffer solution volumes may range from about 100-500 microliters in some embodiments.

Once elution buffer solution 122b (with a concentrated level of N-protein) is within syringe 108, syringe 108 may be employed to deliver elution buffer solution to a COVID-19 rapid antigen test cassette 124 (as shown in FIG. 1F) for COVID-19 testing. For example, droplets 122d of elution buffer solution 122b may be dispensed from syringe 108 into a sample collection region 124a of COVID-19 rapid antigen test cassette 124. In some embodiments, a line 126 and a line 128 may appear within a window 130 of test cassette 124 to indicate a positive COVID-19 test (FIG. 1G) and only line 126 may appear within window 130 to indicate a negative COVID-19 test (FIG. 1H). Other positive and/or negative test indicators may be used. Example COVID-19 rapid antigen test cassettes may include the Siemens CLINITEST^{®} COVID-19 rapid antigen test available from Siemens Healthineers of Erlangen, Germany, the Carestart^{™} COVID-19 rapid antigen test available from Intrivo of Santa Monica, California, the Clarity COVID-19 rapid antigen test cassette available from Clarity Diagnostics, LLC of Boca Raton, Florida, the Sienna^{™} COVID-19 rapid antigen test cassette available from Salofa Oy of Salo, Finland, etc. Other COVID-19 rapid antigen test cassettes may be used.

Because of the high concentration of COVID-19 antigen (e.g., N-protein) within the elution buffer solution delivered by syringe 108, the sensitivity of rapid antigen tests is greatly improved (without using time consuming PCR).

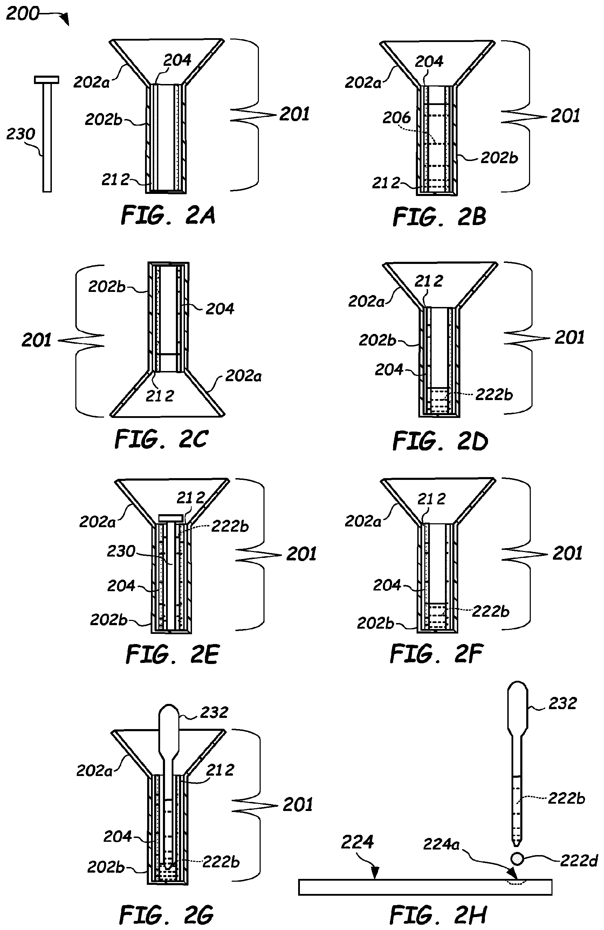

FIGS. 2A-2H illustrate a second embodiment of a collection apparatus at various phases of a collection and concentration method in accordance with the disclosure. With reference to FIG. 2A, a collection apparatus 200 is shown that includes a gargle collection device 201. Gargle collection device 201 may have any shape suitable for facilitating collection of a gargle sample. For example, in the embodiment of FIG. 2A, gargle collection device 201 has a funnel region 202a that extends into a collection region 202b to facilitate transfer of gargle sample from a patient to collection region 202b. Other shapes and/or configurations may be used.

Collection region 202b includes a reagent member 204 in the form of a liner or a cylindrical insert that comprises an exchange medium, such as a paper cylinder, a membrane, a resin, or the like, having one or more reagents deposited therein or thereon. In some embodiments, reagent member 204 is configured to increase the pH of a sample 206 (e.g., saliva or gargle solution with saliva shown in FIG. 2B) collected in gargle collection device 201. In some embodiments, the pH of sample 206 may be increased to between about 9.0 and 9.5. Other pH ranges may be used. Example reagents that may be employed include sodium hydroxide, potassium hydroxide, or any other suitable base.

Reagent member 204 may also include a lysing agent, such as a detergent, provided in or on an exchange medium. The lysing agent is configured to lyse any intact SARS-CoV-2 virus particles and release the N-protein therein. Example lysing reagents were described previously with reference to FIGS. 1A-1H. Other lysing reagents may be used.

Gargle collection device 201 includes a binding medium 212 exhibiting a negatively-charged surface that attracts N-protein present within sample 206 when sample 206 is pH-adjusted and lysed by reagent member 204. In some embodiments, binding medium 212 (exhibiting a negatively-charged surface) may be a part of (e.g., integrally formed with) reagent member 204. Alternatively, binding medium 212 may be separate from reagent member 204 (as shown in FIG. 2A). Because the N-protein of the COVID-19 virus is positively charged, N-protein within sample 206 will be attracted to and held by the negatively-charged surface of binding medium 212. In some embodiments, binding medium 212 may be in the form of a membrane or resin and include carboxymethyl cellulose, carboxymethyl agarose, sulphopropyl sepharose, sulphopropyl agarose, or any other suitable cation ion exchange resin or material, for example.

Example dimensions for reagent member 104 and/or binding medium 212 may range from about 1 to 10 cm in height, depending on the height of collection region 202b and/or sample volume, and about 1-2 mm in thickness. Other dimensions may be used. In one or more alternative embodiments, reagents to increase pH and/or lyse SARS-CoV-2 virus particles may be dried on the bottom and/or bottom sidewalls of gargle collection device 201 and binding element 212 may separately line collection region 202b of gargle collection device 201.

In some embodiments, sample 206 may be a gargle solution provided in a known volume (e.g., about 1-5 mL) that has been swished about a patient's mouth and/or gargled in the patient's throat so that saliva and/or other mucous containing SARS-CoV-2 virus particles are mixed with the gargle solution. Gargle solution may comprise distilled water, a solution containing a salt, such as NaCl, etc. Other suitable gargle solutions may be used.

When saliva-containing gargle sample 206 contacts or passes through reagent member 204 (FIG. 2B), reagents within reagent member 204 change (e.g., increase) the pH of the sample and lyse any SARS-CoV-2 cells present within the sample to release the N-protein. The released N-protein will then bind to the negatively-charged surface of binding medium 212. In some embodiments, allowing sample 206 to reside in gargle collection device 201 for approximately a minute or more will allow binding of the N-protein to the negatively-charged surface of binding medium 212. Then sample 206 may be discarded in an appropriate manner (FIG. 2C).

After sample 206 is discarded, an elution buffer solution 222b is added to gargle collection device 201 (FIG. 2D). Elution buffer solution 222b is configured to elute the N-protein bound to binding medium 212. Example elution buffer solutions were described previously with reference to FIGS. 1A-1H. Other buffer solutions may be used.

As the goal is to concentrate the analyte, a smaller volume of elution buffer solution 222b is employed than the volume of the original gargle sample (sample 206) as shown in FIG. 2D. In some embodiments, as shown in FIG. 2E, a plunger 230 may be placed into gargle collection device 201 to force the elution buffer solution 222b over the entire internal surface of binding medium 212. Plunger 230 may then be removed, leaving a concentrated N-protein sample within elution buffer solution 222b (FIG. 2F).

By using binding medium 212 to trap N-protein from sample 206 and elution buffer solution 222b to free the trapped N-protein, a higher concentration of N-protein may be obtained for testing. For example, the volume of original sample 206 may be substantially larger than the volume of elution buffer solution 222b employed (e.g., 2, 5, 10, 50 or more times the elution buffer volume) so that the concentration of N-protein in elution buffer solution 222b is significantly higher than in the original sample (sample 206).

Once elution buffer solution 222b with a concentrated level of N-protein is formed, a pipette 232 or similar device may be employed to deliver elution buffer solution to a COVID-19 rapid antigen test cassette 224 (as shown in FIGS. 2G and 2H) for COVID-19 testing. For example, droplets 222d of elution buffer solution may be dispensed from pipette 232 into a sample collection region 224a of COVID-19 rapid antigen test cassette 224. Example COVID-19 rapid antigen test cassettes are described previously.

Because of the high concentration of N-protein within the elution buffer solution delivered by pipette 232, the sensitivity of rapid antigen tests is greatly improved.

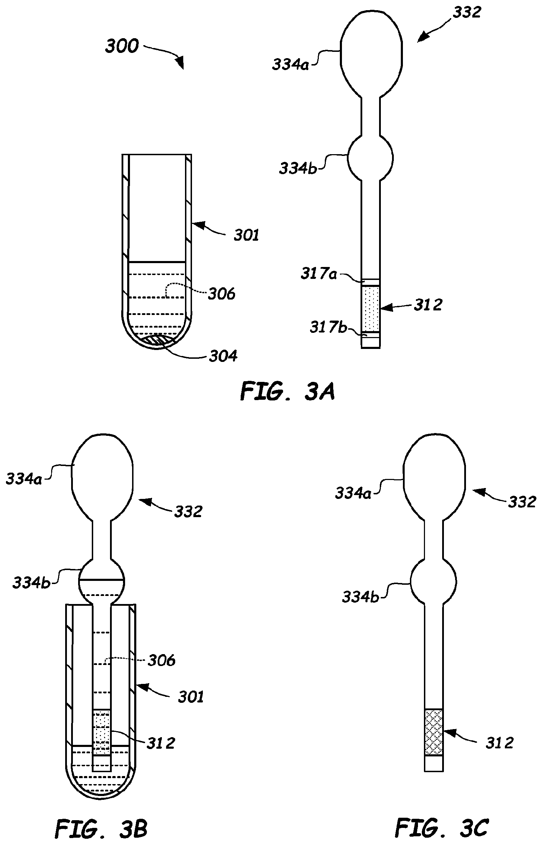

FIGS. 3A-3F illustrate a third embodiment of a collection apparatus at various phases of a collection and concentration method in accordance with the disclosure. With reference to FIG. 3A, a collection apparatus 300 is shown that includes a gargle collection device 301. Gargle collection device 301 may have any shape suitable for facilitating collection of a gargle sample such as a beaker shape as shown, a funnel shape (similar to previously-described gargle collection devices 101 or 201 of FIGS. 1A and 2A, respectively), etc. Other shapes and/or configurations may be used.

In the embodiment of FIG. 3A, gargle collection device 301 includes a reagent member 304 disposed within a bottom region of collection device 301. Reagent member 304 may be a pellet of dried reagent, a coating along a bottom surface of collection device 301, or another suitable exchange medium, such as a paper disc, a membrane, a resin, or the like, having one or more reagents formed or deposited therein or thereon. In some embodiments, as with the previous embodiments, reagent member 304 may be configured as a pH adjuster including one or more reagents functioning to increase the pH of a sample 306 (e.g., a saliva or gargle solution with saliva shown in FIG. 3A) collected in gargle collection device 301. In some embodiments, reagent member 304 may increase the pH of sample 306 to between about 9.0 and 9.5. Other pH ranges may be used. Example reagents that may be employed include sodium hydroxide, potassium hydroxide, or any other suitable base.

Reagent member 304 may include a lysing agent, such as a detergent configured to lyse any intact SARS-CoV-2 virus particles within sample 306 and release the N-protein therein. Example lysing reagents were described previously with reference to FIGS. 1A-1H. Other lysing reagents may be used.

Collection apparatus 300 also includes a pipette 332 have a first (large) bulb 334a and a second (small) bulb 334b for use in extracting and processing N-protein from sample 306 as described further below.

Pipette 332 includes a binding medium 312 exhibiting a negatively-charged surface that attracts N-protein present within sample 306 after sample 306 has been pH-adjusted and lysed by reagent member 304 (as described below). In some embodiments, binding medium 312 (exhibiting a negatively-charged porous surface) may include a paper disc, a membrane, or a resin that is sufficiently porous or contains channels so as to allow the pH-adjusted and lysed sample 306 to pass through binding medium 312. For example, a porous resin may be a dry (e.g., granular) resin, a resin molded or otherwise formed with openings or channels that allow sample solution and/or elution buffer solution to flow therethrough, or the like. A porous membrane may be formed from nylon, nitrocellulose, polytetrafluoroethylene, or another suitable material. In some embodiments, porous support members 317a, 317b, such as porous frits, may hold binding medium 312 within pipette 332 while still allowing sample solution to flow through binding medium 312. In some embodiments, binding medium 312 may include carboxymethyl cellulose, carboxymethyl agarose, sulphopropyl sepharose, sulphopropyl agarose, or any other suitable cation ion exchange resin or material. Example dimensions for binding medium 312 may range from about 4-6 mm in width, depending on the diameter of pipette 332, and about 1 to 100 mm in height. Other dimensions may be used. In some embodiments, porous support members 317a, 317b may be polymer column frits, polytetrafluorethylene frits, or the like.

In some embodiments, sample 306 may be a gargle solution provided in a known volume (e.g., about 1-5 mL) that has been swished about a patient's mouth and/or gargled in the patient's throat so that saliva and/or other mucous containing SARS-CoV-2 virus particles are mixed with the gargle solution. Gargle solution may comprise distilled water, a solution containing a salt, such as NaCl, etc. Other suitable gargle solutions may be used.

Once sample 306 is placed within gargle collection device 301, sample 306 is mixed to dissolve reagent member 304 (FIG. 3B). For example, gargle collection device 301 may be gently swirled for about a minute or more to dissolve reagent member 304. This raises the pH of sample 306 and lyses any SARS-CoV-2 cells present within the sample to release the N-protein.

Pipette 332 is then used to draw pH-adjusted and lysed sample 306 past binding medium 312, allow binding of the N-protein to the negatively-charged surface of binding medium 312. For example, large pipette bulb 334a may be compressed and released one or more times while a tip of pipette 332 is submerged in sample 306 (FIG. 3B) so that sample 306 passes through binding medium 312 one or more times. Thereafter, sample 306 may be returned to gargle collection device 301 and discarded. In this manner, N-protein from sample 306 is extracted from sample 306 and held within binding medium 312 of pipette 332 as shown by the cross-hatching of binding medium 312 in FIG. 3C.

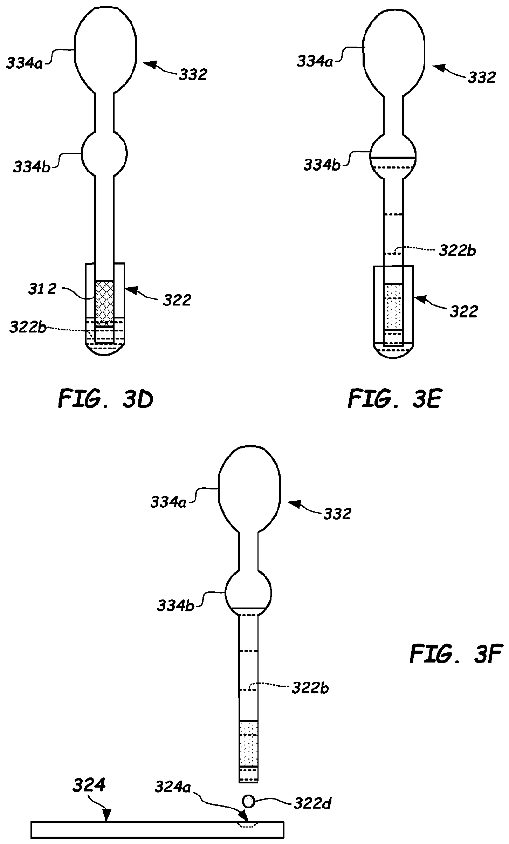

With reference to FIG. 3D, after collection of N-protein within binding medium 312 of pipette 332, a tip of pipette 332 may be placed in an elution buffer container 322 (e.g., a tube or other small container) containing a reagent (e.g., elution buffer solution 322b) configured to elute the N-protein bound within binding medium 312. Examples of suitable elution buffer solutions were described previously with reference to FIGS. 1A-1H. Other elution buffer solutions may be used.

Pipette 332 may be used to draw elution buffer solution 322b from elution buffer container 322 through binding medium 312 to release N-protein bound therein as shown in FIGS. 3D and 3E. For example, small pipette bulb 334b may be compressed and then released one or more times to draw elution buffer solution 322b into pipette 332 (FIG. 3E) and through binding medium 312. Thereafter, elution buffer container 322 may be removed (e.g., disposed of in a biohazard waste container).

By using binding medium 312 to trap N-protein from sample 306 and low-volume elution buffer solution 322b to free the trapped N-protein, a higher concentration of N-protein may be obtained for testing as described previously. For example, an elution buffer solution volume to original sample volume ratio of between 1:10-1-50 may be used in some embodiments.

Once elution buffer solution 322b (with a concentrated level of N-protein) is within pipette 332, pipette 332 may be employed to deliver elution buffer solution to a COVID-19 rapid antigen test cassette 324 (as shown in FIG. 3F) for COVID-19 testing. For example, droplets 322d of elution buffer solution may be dispensed from pipette 332 into a sample collection region 324a of COVID-19 rapid antigen test cassette 324.

As with the previous embodiments, because of the higher concentration of N-protein within the elution buffer solution delivered by pipette 332, the sensitivity of rapid antigen tests is greatly improved.

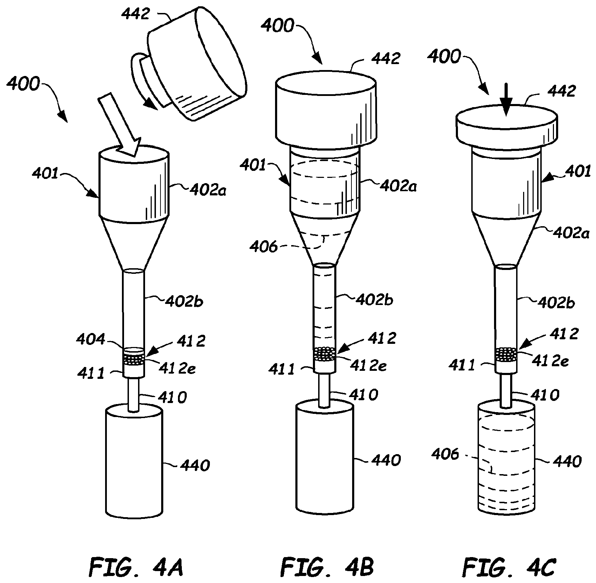

FIGS. 4A-4E illustrate a fourth embodiment of a collection apparatus at various phases of a collection and concentration method in accordance with the disclosure. With reference to FIG. 4A, a collection apparatus 400 is shown that includes a gargle collection device 401. In the embodiment of FIG. 4A, gargle collection device 401 has a funnel region 402a that extends into a collection region 402b to facilitate transfer of a gargle sample from a patient to collection region 402b. Other shapes and/or configurations may be used.

Collection region 402b includes a reagent member 404 having one or more reagents therein or thereon. In some embodiments, reagent member 404 may include a plurality of dry reagents. For example, reagent member 404 may include one or more pH adjuster reagents functioning to increase the pH of a sample 406 (e.g., saliva or gargle solution with saliva shown in FIG. 4B) collected in gargle collection device 401. In some embodiments, the pH of sample 406 may be increased to between about 9.0 and 9.5. Other pH ranges may be used. Example reagents that may be employed include sodium hydroxide, potassium hydroxide, or any other suitable base.

Reagent member 404 may also include a lysing agent, such as a detergent. The lysing agent is configured to lyse any intact SARS-CoV-2 virus particles in sample 406 and release the N-protein therein. Example lysing reagents were described previously with reference to FIGS. 1A-1H. Other lysing reagents may be used. As mentioned, in some embodiments, the pH adjuster reagent(s) and/or lysing reagent(s) may be dry reagents.

Collection region 402b may further include a binding medium 412 exhibiting a negatively-charged surface that attracts N-protein present within sample 406 (e.g., once sample 406 is pH-adjusted and lysed by reagent member 404). In the embodiment shown, binding medium 412 may include a plurality of beads, pellets, grains, or other similar structures (referred to herein as binding elements 412e) formed from a resin or other material that each present a negatively-charged surface. Because the N-protein of the COVID-19 virus is positively charged, N-protein within lysed sample 406 will be attracted to and held by the negatively-charged surfaces of binding elements 412e of binding medium 412. In some embodiments, binding elements 412e of binding medium 412 may include carboxymethyl cellulose, carboxymethyl agarose, sulphopropyl sepharose, sulphopropyl agarose, or any other suitable anion ion exchange resin, for example. The dry reagents of reagent member 404 may be separate from (as shown in FIG. 4A) or mixed with (not shown) the binding elements 412e of binding medium 412, for example.

Referring again to FIG. 4A, gargle collection device 401 may include a drain 410 configured to couple to a waste container 440. A filter 411 or similar structure may be used to prevent binding elements 412e of binding medium 412 from exiting drain 410 as described further below. In some embodiments, filter 411 may be formed from paper, a polymer column frit, a polytetrafluorethylene frit, or the like. Other filter materials may be used.

In operation, a patient may swish and/or gargle a gargle solution (e.g., about 1-5 mL) which is then dispensed into funnel region 402a of collection device 401 as sample 406 (FIG. 4B). In this manner, saliva and/or other mucous containing SARS-CoV-2 virus particles are mixed with the gargle solution and transferred to collection region 402b of gargle collection device 401. Gargle solution may comprise distilled water, a solution containing a salt, etc. Other suitable gargle solutions may be used.

Sample 406 may fill collection region 402b and a portion of funnel region 402a, for example. Gargle collection device 401 may then be gently shaken or rocked to re-suspend and/or dissolve the reagents of reagent member 404 within sample 406 (FIG. 4B). This will increase the pH of sample 406 and lyse any SARS CoV-2 virus particles therein. Thereafter, a bellows 442 may be placed over funnel region 402a (FIG. 4B). Bellows 442 then may be compressed to force sample 406 (with pH-adjusting and lysing reagents dissolved therein) through binding elements 412e of binding medium 412 and filter 411 into waste container 440 (FIG. 4C). Alternatively, a bulb or other similar device may be employed to force sample 406 through binding medium 412 and filter 411. As pH-adjusted and lysed sample 406 travels through binding medium 412, N-protein from sample 406 binds to the negatively-charged surfaces present in binding elements 412e of binding medium 412. In this state, N-protein from sample 406 remains bound within binding medium 412 and the remaining portion of sample 406 enters waste container 440 (FIG. 4C).

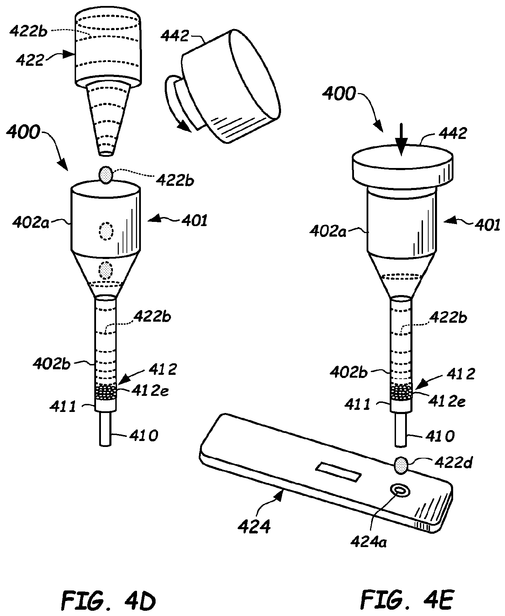

Gargle collection device 401 may then be removed from waste container 440. Bellows 442 may be removed from gargle collection device 401 and an elution buffer reagent container 422 may be used to supply elution buffer solution 422b to gargle collection device 401 as shown in FIG. 4D. In some embodiments, about 100-500 microliters, and in other embodiments about 100-300 microliters, of elution buffer solution may be employed. Other elution buffer solution volumes may be used. As the goal is to concentrate the analyte, a smaller volume of elution buffer solution 422b is employed than the volume of the original gargle sample (sample 406) .

Bellows 442 may be placed over funnel region 402a (FIG. 4E) and compressed to force elution buffer solution 422b through binding medium 412 and filter 411. Elution buffer solution 422b is configured to elute the N-protein bound to binding elements 412e of binding medium 412. The freed N-protein is thus transferred to the elution buffer solution (creating a concentrated level of N-protein in the elution buffer solution compared to the original sample because of the reduced volume of elution buffer solution used). Example elution buffer solutions are described previously. Other buffer solutions may be used.

As elution buffer solution 422b (with a concentrated level of N-protein) passes through filter 411, the elution buffer solution may pass through drain 410 to deliver elution buffer solution to a COVID-19 rapid antigen test cassette 424 (as shown in FIG. 4E) for COVID-19 testing. For example, droplets 422d of elution buffer solution may be dispensed from drain 410 into a sample collection region 424a of COVID-19 rapid antigen test cassette 424. Example COVID-19 rapid antigen test cassettes are described previously.

Because of the high concentration of N-protein within the elution buffer solution delivered by collection device 401, the sensitivity of rapid antigen tests is greatly improved.

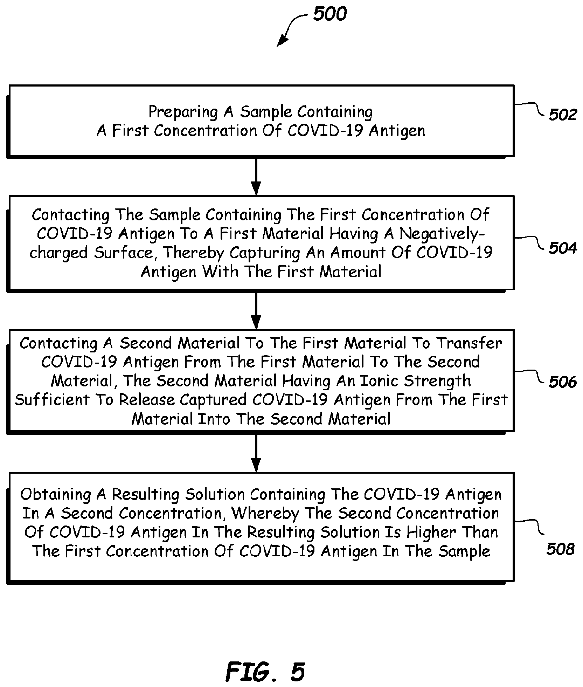

FIG. 5 illustrates an embodiment of a collection method 500 of increasing a concentration of a COVID-19 antigen in accordance with the disclosure. With reference to FIG. 5, method 500 includes preparing a sample containing a first concentration of COVID-19 antigen (Block 502). For example, a sample may be collected from a patient such as a gargle solution provided in a known volume that has been swished about a patient's mouth and/or gargled in the patient's throat so that saliva and/or other mucous containing SARS-CoV-2 virus particles are mixed with the gargle solution. Assuming the patient has COVID-19, such a sample will have a measurable concentration of COVID-19 antigen. As described previously with reference to FIGS. 1A-4E, to prepare the sample, in some embodiments the sample may be exposed to one or more reagents to raise the pH of the sample and to lyse any SARS-CoV-2 cells present within the sample to release the N-protein. The one or more reagents may form a reagent member and be dry reagents, reagents formed on and/or in a paper disc, a paper cylinder, a membrane, a resin, or the like.

In Block 504, the sample containing the first concentration of COVID-19 antigen is contacted to a first material having a negatively-charged surface, thereby capturing an amount of COVID-19 antigen with the first material. For example, once pH-adjusted and/or lysed, the sample may be contacted to a binding medium having a negatively-charged surface as described with reference to binding medium 112, 212, 312 and/or 412. The binding medium may be a resin, a membrane, or another suitable material. Contacting the "prepared" sample (e.g., the pH-adjusted and/or lysed sample) to the binding medium will bind N-protein from the sample to the binding medium. The remaining sample may be disposed of in a waste container. As described, in some embodiments, the first material (e.g., a binding medium) may be located with a gargle collection device, while in other embodiments, the first material may be located in a syringe or pipette.

In Block 506, a second material is contacted to the first material to transfer COVID-19 antigen from the first material to the second material. The second material has an ionic strength sufficient to release captured COVID-19 antigen from the first material into the second material. For example, an elution buffer solution (e.g., elution buffer solution 122, 222, 322 or 422) may be employed to contact the binding medium to which N-protein is bound so as to release the N-protein into the elution buffer solution. Example high ionic strength elution buffer solutions may include, for example, a phosphate buffer, sodium chloride, sodium fluoride, sodium bromide, potassium chloride, potassium fluoride, potassium bromide, lithium chloride, lithium fluoride, lithium bromide, another high ionic strength solution, or the like.

In Block 508, a resulting solution containing the COVID-19 antigen in a second concentration is obtained. The second concentration of COVID-19 antigen in the resulting solution is higher than the first concentration of COVID-19 antigen in the sample. For example, an elution buffer solution used to elute N-protein from a binding medium may be the resulting solution used for subsequent rapid antigen testing. Transferring N-protein from the original sample to a lower volume elution buffer solution will produce an elution buffer solution with a higher COVID-19 antigen concentration (e.g., a higher N-protein concentration) than the original sample. In some embodiments, the original gargle sample may have a volume that is 2, 5, 10, 50 or more times the elution buffer solution volume, resulting in a significant increase in the concentration of COVID-19 antigen in the resulting solution.

In one or more embodiments, an apparatus or "kit" may be provided that comprises the first material and the second material, and that is suitable for performing method 500. For example, the kit may include a collection device, a syringe, a plunger, a pipette, gargle solution, a reagent member, a binding medium, elution buffer solution, and/or the like configured to assist at least one of contact of the sample with the first material (e.g., a binding medium) and contact of the first material with the second material (e.g., an elution buffer solution). Example collection apparatus that may form one or more kits are described with reference to FIGS. 1A-4E above. Other kits may be formed and/or developed.

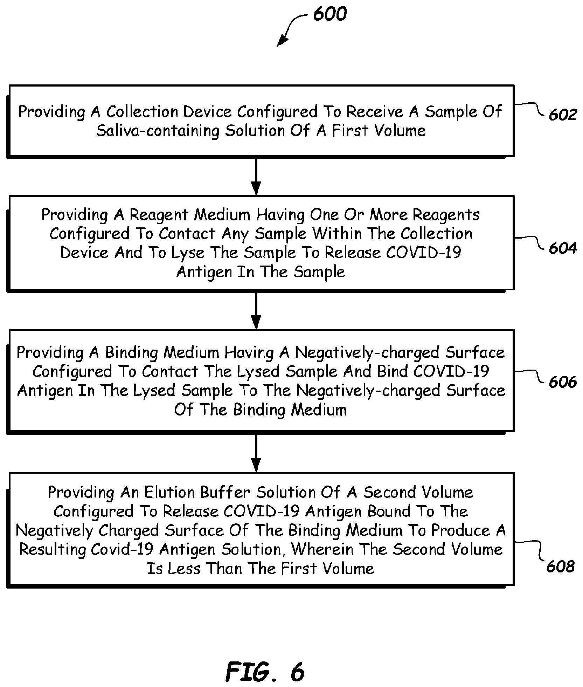

FIG. 6 illustrates an example method 600 of making a collection apparatus configured to collect and concentrate a COVID-19 antigen in accordance with the disclosure. Method 600 includes providing a collection device configured to receive a sample of saliva-containing solution of a first volume (Block 602). For example, a gargle collection device having a funnel region and collection region (see, for example, FIGS. 1A, 2A and/or 4A) may be provided to collect a saliva-containing sample from a patient. Other collection device configurations may be employed.

In Block 604, method 600 includes providing a reagent member having one or more reagents configured to contact any sample within the collection device and to lyse the sample so as to release COVID-19 antigen (e.g., N-protein) in the sample. In some embodiments, the reagent member may also include one or more reagents to adjust (e.g., increase) a pH of the sample. Example reagent members 104, 204, 304 and 404 are described previously and may include dry reagents, reagents in paper, a membrane, a resin, reagents in the form of a pellet, a reagent liner that coats a bottom and/or side of a collection device, and/or the like. A reagent member may be located in and/or provided with a collection device, for example.

In Block 606, method 600 includes providing a binding medium having a negatively-charged surface configured to contact the lysed sample and bind COVID-19 antigen in the lysed sample to the negatively-charged surface of the binding medium. For example, the binding medium may be a cation ion exchange agent (e.g., a membrane or resin), having a negatively-charged surface configured to contact a pH-adjusted and lysed saliva-containing sample. During contact with the binding medium, at least some, and in some embodiments a majority, of N-protein present in the lysed and pH-adjusted sample is attracted and bound to the negatively-charged surface of the binding medium. Example binding mediums 112, 212, 312 and 412 are described above with reference to FIGS. 1A-4E. In some embodiments, the binding medium may be located in a syringe or pipette while in other embodiments the binding medium may be located within the collection device (e.g., as a liner, a membrane, a resin, etc.). The binding medium may include one or more binding medium structures such as a plurality of resin beads, pellets, grains, etc. A waste container, such as waste container 440 in FIGS. 4A-4C, may be provided for disposal of the remaining sample once the N-protein binds to the negatively-charged surface of the binding medium.

In Block 608, method 600 includes providing an elution buffer solution of a second volume configured to release COVID-19 antigen bound to the negatively-charged surface of the binding medium to produce a resulting COVID-19 antigen solution. The second volume of the elution buffer solution is less than the first volume of the original sample. Example elution buffer solutions 122b, 222b, 322b and 422b are described above with reference to FIGS. 1E-4A and may include any elution buffer solution having an ionic strength sufficient to release captured COVID-19 antigen (e.g., N-protein) held within and/or by a binding medium. COVID-19 antigen freed by the elution buffer solution enters the elution buffer solution and produces a resulting solution that may be employed during rapid antigen testing. To increase the concentration of COVID-19 antigen during testing, a smaller volume of elution buffer solution is used (in comparison to the original sample). For example, in some embodiments, the volume of the gargle solution employed may be at least 10 times the volume of the elution buffer solution used.

The foregoing description discloses only example embodiments. Modifications of the above-disclosed apparatus and methods which fall within the scope of this disclosure will be readily apparent to those of ordinary skill in the art. For instance, while the embodiments described herein relate primarily to COVID-19 antigens and COVID-19 testing, it will be understood that other antigens may be similarly concentrated for testing. For example, in some embodiments, the N-proteins of other viruses and/or another surface protein with a high isoelectric point (pI), such as 8 or higher, may be concentrated as described herein. The nucleoprotein of the influenza virus may be concentrated as described above, for example. In one or more embodiments relating to the influenza virus, the pH of the extraction (elution) buffer may be lowered as the pI of the influenza nucleoprotein is approximately 9.9. The methods and devices described herein may similarly concentrate (and make detection possible of) the antigens present in other respiratory viruses, e.g., in the influenza or coronavirus families.

In one or more embodiments, a collection apparatus is provided for concentrating an antigen from a respiratory virus. The collection apparatus includes a space configured to hold an initial sample containing the antigen. For example, the space may be within a container configured to hold the initial sample, such as collection device 201 of FIGS. 2A-2G or collection device 401 of FIGS. 4A-4E. Alternatively, the space for holding an initial sample may be located within a syringe or a pipette, as described with reference to FIGS. 1A-1F or 3A-3F, respectively.

The collection apparatus also includes a binding medium which is in contact with the space. The binding medium has a negatively-charged surface configured to contact the sample and bind the antigen in the sample to the negatively-charged surface. Example binding mediums are described previously with reference to FIGS. 1A-4E.

The collection apparatus also includes an opening configured to introduce an amount of elution buffer solution into the space to release the antigen from the negatively-charged surface (producing a resulting sample). In some embodiments, the opening may be an opening of a container into which a patient also deposits the initial sample, such as collection device 201 of FIGS. 2A-2G or collection device 401 of FIGS. 4A-4E, for example. Alternatively, the opening configured to introduce an amount of elution buffer solution may be an opening of a syringe or a pipette as described with reference to FIGS. 1A-1F or 3A-3F, respectively.

The collection apparatus further includes a delivery mechanism configured to release the resulting sample to a testing medium. For example, in some embodiments, the delivery mechanism may be a drain or similar opening, such as drain 410 of collection device 401 of FIGS. 4A-4E. Other delivery mechanisms may include a syringe or pipette, for example, such as syringe 108 of FIGS. 1A-1F, pipette 232 of FIGS. 2G-2H, or pipette 332 of FIGS. 3A-3F. Other collection apparatus configurations may be employed. Through use of the collection apparatus, the resulting sample (e.g., elution buffer solution) has a higher concentration of the antigen than the initial sample (e.g., a saliva-containing solution from a patient).

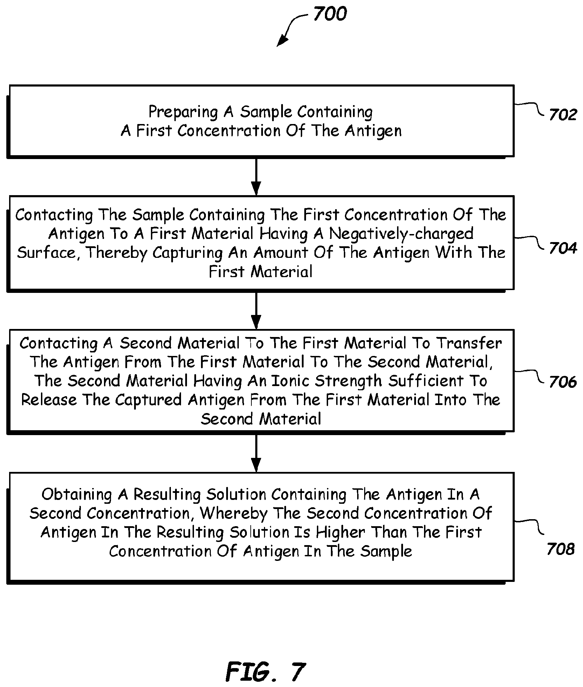

FIG. 7 illustrates an embodiment of a collection method 700 of increasing a concentration of an antigen of a respiratory virus in accordance with the disclosure. With reference to FIG. 7, method 700 includes preparing a sample containing a first concentration of the antigen (Block 702). For example, a sample may be collected from a patient such as a gargle solution provided in a known volume having saliva and/or other mucous containing virus particles therein from a respiratory virus (e.g., a coronavirus, an influenza virus, or another respiratory virus). As described previously with reference to FIGS. 1A-4E, to prepare the sample, in some embodiments the sample may be exposed to one or more reagents to raise the pH of the sample and to lyse virus cells present within the sample to release the antigen.

In Block 704, the sample containing the first concentration of the antigen is contacted to a first material having a negatively-charged surface, thereby capturing an amount of the antigen with the first material. For example, once pH-adjusted and/or lysed, the sample may be contacted to a binding medium having a negatively-charged surface as described with reference to binding medium 112, 212, 312 and/or 412. The remaining sample may be disposed of in a waste container.

In Block 706, a second material is contacted to the first material to transfer the antigen from the first material to the second material. The second material has an ionic strength sufficient to release the captured antigen from the first material into the second material. For example, an elution buffer solution (e.g., elution buffer solution 122, 222, 322 or 422) may be employed to contact the binding medium to which antigen is bound so as to release the antigen into the elution buffer solution.

In Block 708, a resulting solution containing the antigen in a second concentration is obtained. The second concentration of antigen in the resulting solution is higher than the first concentration of antigen in the sample. For example, an elution buffer solution used to elute antigen from a binding medium may be the resulting solution used for subsequent rapid antigen testing. Transferring antigen from the original sample to a lower volume elution buffer solution will produce an elution buffer solution with a higher antigen concentration than the original sample.

In some embodiments, a sample may be lysed but not pH adjusted.

Accordingly, while the present invention has been disclosed in connection with example embodiments thereof, it should be understood that the invention is defined by the following claims.

## Claims

1. A method of increasing a concentration of an antigen of a respiratory virus, comprising:
preparing a sample containing a first concentration of the antigen (502); contacting the sample containing the first concentration of the antigen to a first material having a negatively-charged surface (112), thereby capturing an amount of the antigen with the first material (504);
contacting a second material to the first material to transfer the antigen from the first material to the second material, the second material having an ionic strength sufficient to release the captured antigen from the first material into the second material (506); and
obtaining a resulting solution containing the antigen in a second concentration;
whereby the second concentration of antigen in the resulting solution is higher than the first concentration of antigen in the sample (508), and whereby the sample is saliva or a gargle solution containing saliva.

2. The method of claim 1, wherein preparing the sample comprises lysing a SARS-CoV-2 virus contained in the sample with a detergent and increasing a pH of the sample.

3. The method of claim 1, wherein the first material is a membrane, wherein the membrane preferably further comprises a detergent and pH-increasing reagents.

4. The method of claim 1, where the first material is a paper, where the paper preferably further comprises a detergent and pH-increasing reagents.

5. The method of claim 1, wherein the first material is a resin.

6. The method of claim 1, wherein the second material is a buffer with a high ionic strength.

7. The method of claim 1, wherein the sample has a volume that is larger than a volume of the resulting solution.

8. The method of claim 1, wherein the antigen is from a coronavirus or an influenza virus.

## Patentansprüche

1. Verfahren zum Erhöhen einer Konzentration eines Antigens eines respiratorischen Virus, umfassend:
Vorbereiten einer Probe, die eine erste Konzentration des Antigens enthält (502);
Kontaktieren der Probe, die die erste Konzentration des Antigens enthält, mit einem ersten Material mit einer negativ geladenen Oberfläche (112), wodurch eine Menge des Antigens mit dem ersten Material (504) eingefangen wird;
Kontaktieren eines zweiten Materials mit dem ersten Material, um das Antigen von dem ersten Material auf das zweite Material zu übertragen, wobei das zweite Material eine Ionenstärke aufweist, die ausreicht, um das eingefangene Antigen von dem ersten Material in das zweite Material freizusetzen (506); und
Erhalten einer resultierenden Lösung, die das Antigen in einer zweiten Konzentration enthält; wobei die zweite Antigenkonzentration in der resultierenden Lösung höher ist als die erste Antigenkonzentration in der Probe (508),
und wobei die Probe Speichel oder eine Speichel enthaltende Gurgellösung ist.

2. Verfahren nach Anspruch 1, wobei Vorbereiten der Probe Lysieren eines in der Probe enthaltenen SARS-CoV-2-Virus mit einem Detergens und Erhöhen eines pH-Werts der Probe umfasst.

3. Verfahren nach Anspruch 1, wobei das erste Material eine Membran ist, wobei die Membran vorzugsweise ferner ein Detergens und pH-erhöhende Reagenzien umfasst.

4. Verfahren nach Anspruch 1, wobei das erste Material ein Papier ist, wobei das Papier vorzugsweise ferner ein Detergens und pH-erhöhende Reagenzien umfasst.

5. Verfahren nach Anspruch 1, wobei das erste Material ein Harz ist.

6. Verfahren nach Anspruch 1, wobei das zweite Material ein Puffer mit einer hohen Ionenstärke ist.

7. Verfahren nach Anspruch 1, wobei die Probe ein Volumen aufweist, das größer als ein Volumen der resultierenden Lösung ist.

8. Verfahren nach Anspruch 1, wobei das Antigen von einem Coronavirus oder einem Influenzavirus stammt.

## Revendications

1. Procédé d'augmentation d'une concentration d'un antigène d'un virus respiratoire, comprenant :
la préparation d'un échantillon contenant une première concentration de l'antigène (502) ;
la mise en contact de l'échantillon contenant la première concentration de l'antigène avec un premier matériau ayant une surface chargée négativement (112), ce qui permet de capturer une quantité de l'antigène avec le premier matériau (504) ;
la mise en contact d'un deuxième matériau avec le premier matériau pour transférer l'antigène du premier matériau au deuxième matériau, le deuxième matériau ayant une force ionique suffisante pour libérer l'antigène capturé du premier matériau vers l'intérieur du deuxième matériau (506) ; et
l'obtention d'une solution résultante contenant l'antigène à une deuxième concentration, la deuxième concentration d'antigène dans la solution résultante étant supérieure à la première concentration d'antigène dans l'échantillon (508),
et l'échantillon étant de la salive ou un gargarisme contenant de la salive.

2. Procédé de la revendication 1, dans lequel la préparation de l'échantillon comprend la lyse d'un virus SARS-CoV-2 contenu dans l'échantillon avec un détergent et l'augmentation du pH de l'échantillon.

3. Procédé de la revendication 1, dans lequel le premier matériau est une membrane, la membrane comprenant aussi de préférence un détergent et des réactifs augmentant le pH.

4. Procédé de la revendication 1, dans lequel le premier matériau est un papier, le papier comprenant aussi de préférence un détergent et des réactifs augmentant le pH.

5. Procédé de la revendication 1, dans lequel le premier matériau est une résine.

6. Procédé de la revendication 1, dans lequel le deuxième matériau est un tampon doté d'une force ionique élevée.

7. Procédé de la revendication 1, dans lequel l'échantillon a un volume qui est plus grand qu'un volume de la solution résultante.

8. Procédé de la revendication 1, dans lequel l'antigène provient d'un coronavirus ou d'un virus de la grippe.
